# EUROPÄISCHE PATENTSCHRIFT

(11) **EP 4 326 612 B1**
(45) Veröffentlichungstag und Bekanntmachung des Hinweises auf die Patenterteilung: **29.10.2025**
(21) Anmeldenummer: 22724657.6
(22) Anmeldetag: 21.04.2022
(51) Int. Cl.: B64C 27/00, B64C 27/08, B64C 39/00, B64C 39/02, B64C 1/06, B64D 27/24

(54) **MULTICOPTER**
MULTICOPTER
MULTICOPTER

(30) Priorität: 23.04.2021 DE 102021110426
(43) Veröffentlichungstag der Anmeldung: 28.02.2024
(73) Patentinhaber: Starcopter GmbH, 38106 Braunschweig (DE)
(72) Erfinder: NIEBUHR, Henner, 38118 Braunschweig (DE); FRÖHNER, Lasse, 38678 Clausthal-Zellerfeld (DE)
(74) Vertreter: Gramm, Lins & Partner Patent- und Rechtsanwälte PartGmbB
(86) Internationale Anmeldenummer: PCT/EP2022/060528
(87) Internationale Veröffentlichungsnummer: WO 2022/223680

(56) Entgegenhaltungen:
- WO-A1-2019/204932
- WO-A1-2020/019629
- CN-A- 107 960 073
- KR-B1- 101 461 059

## Beschreibung

Die Erfindung betrifft einen Multicopter mit einem Grundkörper und mit mehreren, an dem Grundkörper angeordneten Rotoren, die mit zumindest einem Antrieb gekoppelt sind und durch Drehung der Rotoren Auftrieb und Vortrieb erzeugen, wobei jeder Rotor an einer Tragstruktur befestigt ist, die von dem Grundkörper von einem Grundkörperzentrum weg nach außen ragt, wobei in dem Grundkörper zumindest eine Aufnahmeeinrichtung für einen Energiespeicher angeordnet ist, über den der Antrieb mit Energie versorgt wird.

Eine Multicopter ist ein Luftfahrzeug, dass bemannt oder unbemannt betrieben werden kann und eine bestimmte Anzahl nach unten wirkender Rotoren benutzt, um Auftrieb und durch Neigung der Rotorebene auch Vortrieb zu erzeugen. Ein Multicopter gehört zu den Hubschraubern und kann wie diese vertikal starten und landen. Solche Luftfahrzeuge oder auch Drohnen haben in den letzten Jahren eine große Verbreitung gefunden und werden sowohl für private als auch professionelle Anwendungen eingesetzt. Für Privatanwendungen werden die sogenannten Drohnen häufig mit Kameras versehen und für Fotografie oder Filmaufnahmen verwendet. Bei professionellen Anwendungen können mit einem Multicopter beispielsweise Bauteiluntersuchungen oder geologische oder geographische Messungen durch daran befestigte Diagnoseeinrichtungen durchgeführt werden. Ebenso können Einrichtungen, Untersuchungsgeräte und natürlich auch Kameraeinrichtungen zur Untersuchung oder zur Überwachung mit solchen Multicoptern transportiert werden.

Multicopter werden überwiegend elektrisch angetrieben, wobei das Problem besteht, dass die Energiedichte gegenwärtiger elektrischer Energiespeicher wesentlich geringer als bei fossilen Brennstoffen der Luftfahrt wie Benzin oder Kerosin ist. Die Folge daraus ist, dass die elektrisch umsetzbare Flugleistung als Verhältnis von maximaler Flugzeit zur Nutzlast kaum ausreichend für viele Anwendungen ist. Um die elektrisch umsetzbare Flugleistung zu steigern, besteht die Möglichkeit Energiespeicher mit einer erhöhten Energiedichte zu verwenden. Die Entwicklung solcher Energiespeicher scheint gegenwärtig in einem entfernten Zeithorizont zu liegen. Unabhängig davon kann die Flugleistung dadurch gesteigert werden, dass die Multicopter möglichst leicht gebaut werden. Hierzu werden gegenwärtig Faserverbundwerkstoffen wie CF K und GFK verwendet, was kostenintensiv und die Umwelt belastend ist, da Faserverbundwerkstoffe nicht oder nur schwer recycelbar sind.

Der Auftrieb wird bei Multicoptern über die angetriebenen Rotoren erzeugt, wobei mehrere, zumindest zwei voneinander entfernt liegende Rotoreinheiten vorhanden sind, die mit einer entsprechenden Elektronik zur Steuerung und Regelung der einzelnen Rotoren oder Rotoreinheit, zumindest einem Energiespeicher und einer tragenden Gesamtstruktur oder einem Grundkörper ausgestattet sind. Der Grundkörper verbindet die Rotoreinheiten und die übrigen Komponenten stabil miteinander. Ein effizientes Design setzt einen möglichst ungehinderten Luftstrom in dem Wirkungsbereich der Rotoreinheiten voraus, sodass die Luft möglichst ungehindert strömen kann. Dazu sollte der Bereiche der Rotoreinheiten möglichst unverbaut sein. Je zentraler die Hauptmasse des Multicopters angeordnet ist, desto stabiler ist das Flugverhalten und desto geringer ist der Energieverbrauch im Flug.

Aus dem Stand der Technik sind Multicopter bekannt, bei denen an einem kugelförmigen Hohlkörper die Rotoreinheiten befestigt sind. Die Energiespeicher sind in dem Inneren des Hohlkörpers befestigt und durch eine Klappe oder einen Deckel zugänglich. Eine alternative Bauweise sieht zwei parallel zueinander liegende Platten vor, sogenannte Centerplates, die durch vertikal orientierte Abstandselemente miteinander verbunden sind. Die Platten sind massiv, die Rotoreinheiten sind an Trägern direkt zwischen den beiden Centerplates oder den vertikalen Abstandselementen befestigt. Energiespeicher werden oberhalb der Platten oder unterhalb der Platten unter einer Abdeckung oder an separaten Halterungen befestigt. Alternativ sind die Energiespeicher zwischen den beiden Platten angeordnet und müssen seitlich eingeschoben werden.

Die WO 2019/204 932 A1 betrifft eine unbemannte Drohne mit einem Grundkörper, von dem aus sich Tragarme seitlich nach außen erstrecken. An den Tragarmen sind Rotoren befestigt Innerhalb des Grundkörpers sind Aufnahmekammern für die aufzunehmende Traglast ausgebildet. Ebenso ist ein Batteriefach vorgesehen, sowohl das Batteriefach als auch die Aufnahmekammern sind von oben zugänglich.

Aus der CN 107697280 A1 ist ein unbemanntes Luftfahrzeug mit einem Grundkörper und acht Tragarmen, an denen Rotoren befestigt sind, bekannt. Innerhalb des Grundkörpers sind eine Vielzahl von Batteriefächern angeordnet, die von einer Abdeckung abgedeckt sind.

Die KR 101 461 059 B1 beschreibt ein faltbares Fluggerät mit einem Grundkörper, der eine obere Abdeckung, eine untere Abdeckung sowie eine Seitenabdeckung aufweist. Das Fluggerät weist eine Halterung auf, die eine erste Halteplatte und eine zweite Halteplatte aufweist. Zwischen der ersten Halteplatte und der zweiten Halteplatte ist eine Drehplatte angeordnet. Die Rotoren sind an Gelenkverbindungen angeordnet, die sich von der Halterung radial nach außen erstrecken. Die Gelenkverbindungen sind über eine Stange mit der Drehplatte verbunden.

Die WO 2020/019629 A1 betrifft einen Drohnenrahmen in Fachwerkbauweise mit einer Vielzahl von Armen und einem Verbindungselement. Die Arme bestehen jeweils aus einem Hauptarm und zwei Stützarmen. Die inneren Enden der Hauptarme sind an dem Verbindungselement befestigt. An den äußeren Enden sind die Stützarme angeordnet. An den äußeren Enden der Stützarme sind die Rotoren angeordnet. Das Verbindungselement ist zentral in einem Grundkörper angeordnet. Der Grundkörper weist eine Bodenplatte und eine Seitenwand auf. Die Seitenwand weist Durchlässe auf, durch die sich die Hauptarme erstrecken.

Die CN 107 960 073 A beschreibt eine Drohne mit einem Grundkörper, einer Plattform, einer Entfaltungsvorrichtung und mehreren Propellern. Die Entfaltungsvorrichtung umfasst mehrere fixierte Stützstangen, die sich von der Außenseite der Plattform radial erstrecken, und mehrere drehbare Stützstangen, die am freien Ende der fixierten Stützstangen befestigt sind. Die Propeller sind am radial äußeren Ende der rotierenden Stützstangen befestigt. Der Grundkörper weist mehrere Segmente auf. Die Seitenwände der Segmente werden durch radial ausgerichtete Streben gebildet, die kollinear zu den fixierten Stützstangen ausgerichtet sind.

Aufgabe der vorliegenden Erfindung ist es, einen Multicopter bereitzustellen, der kostengünstig herzustellen ist und eine verbesserte elektrische Flugleistung bei gleichzeitigen guten Flugeigenschaften und einer verbesserten Wartungsfreundlichkeit bereitstellt.

Diese Aufgabe wird durch einen Multicopter mit den Merkmalen des Hauptanspruches gelöst. Vorteilhafte Ausgestaltungen und Weiterbildungen der Erfindung sind in den Unteransprüchen, der Beschreibung sowie den Figuren offenbart.

Der Multicopter mit einem Grundkörper und mehreren, an dem Grundkörper angeordneten Rotoren, die mit zumindest einem Antrieb gekoppelt sind und durch Drehung der Rotoren Auftrieb und Vortrieb erzeugen, und mit zumindest einem Energiespeicher, wobei jeder Rotor an einer Tragstruktur befestigt ist, die von dem Grundkörper von einem Grundkörperzentrum weg nach außen ragt, wobei in dem Grundkörper zumindest eine Aufnahmeeinrichtung für den Energiespeicher angeordnet ist, über den der Antrieb mit Energie versorgt wird, sieht vor, dass der Grundkörper in Segmente unterteilt ist, die von inneren und äußeren, den Grundkörper umfänglich begrenzenden Seitenwänden eingefasst sind, wobei die Segmente die Aufnahmeeinrichtungen bilden oder die Aufnahmeeinrichtungen aufnehmen und jeweils eine Einführöffnung für den oder die Energiespeicher aufweisen, die in und/oder entgegen der Auftriebsrichtung orientiert ist. Die inneren Seitenwände sind auf das Grundkörperzentrum oder einen Zentralkörper ausgerichtet und die Tragstrukturen sind Teil der inneren Seitenwände oder bilden die inneren Seitenwände aus. Der Aufbau des Multicopters mit einem Grundkörper, der in Segmente unterteilt ist, führt zu einer Skelettstruktur, da der Grundkörper in einer Gerüstbauweise aufgebaut ist. Die Tragstrukturen ragen dabei von einem Grundkörperzentrum weg nach außen, wodurch die Rotoren von dem Grundkörper weg nach außen verlagert sind. Die Längserstreckungen der Tragstrukturen können sich in einem gemeinsamen Punkt schneiden, alternativ können die Längserstreckungen der Tragstrukturen in der Draufsicht sich an unterschiedlichen Punkten schneiden. Die Tragstrukturen ragen radial nach außen und ermöglichen eine mehr oder weniger ungestörte Luftströmung durch die angetriebenen Rotoren. Innerhalb des Grundkörpers entsteht durch die Aufteilung in Segmente ein nutzbarer Raum für die Energiespeicher, die entweder unmittelbar in die Segmente eingesetzt oder über eine Aufnahmeeinrichtung, beispielsweise in Gestalt einer Halterung in Segmentform, darin gehalten sind. Die Montage und Demontage der Energiespeicher in den jeweiligen Segmenten erfolgt in vertikaler Richtung, also in Auftriebsrichtung oder entgegen Auftriebsrichtung in die aufgebrochene Struktur des Grundkörpers von oben oder von unten. Die Richtungsangaben "oben" und "unten" sind in Bezug auf die Schwerkraftrichtung oder die Auftriebsrichtung zu verstehen. Durch die Positionierung der Einführöffnung oberhalb oder unterhalb des Grundkörpers mit einer Fügebewegung in vertikaler Richtung ist es möglich, dass Energiespeicher nach oben oder unten über die jeweiligen Kanten der Seitenwände hinausragen können, sodass unterschiedliche Formate von Energiespeichern verwendet werden können, ohne dass eine bauliche Einschränkung besteht oder die Strömungsbedingungen für die Rotoreinheiten verändert werden. Die Seitenwände bilden in einer Ausführungsform einen Einführschacht für die Aufnahmeeinrichtung und/oder den jeweiligen Energiespeicher des Segmentes. Die Seitenwände, die nicht den Grundkörper umgeben, sind auf ein Zentrum oder einen Zentralkörper ausgerichtet. Die radial nach innen bzw. außen orientierten Seitenwände sind bei einer sternförmigen Orientierung auf ein Zentrum, insbesondere auf das Grundkörperzentrum so orientiert, dass sie sich in einem gemeinsamen Punkt schneiden oder einen gemeinsamen Zentralkörper bilden. Innerhalb des Zentralkörpers, der auch als separates Segment ausgebildet sein kann, kann eine Ausnehmung oder eine Aufnahme für eine weitere Komponente angeordnet sein, beispielsweise eine Steuerungseinrichtung oder eine zentrale Energiespeichereinrichtung. Der Grundkörper mit den Seitenwänden kann als einstückiges Bauteil gefertigt sein, beispielsweise aus einem Kunststoff oder einem Leichtmetall. Alternativ ist der Grundkörper aus separaten Komponenten gefertigt, die aneinander festgelegt sind. Die Festlegung der einzelnen Komponenten aneinander kann formschlüssig und/oder stoffschlüssig ausgeführt sein.

Insbesondere erstrecken sich die Seitenwände durchgängig von dem Zentrum nach außen. Die Tragstrukturen, die an ihren äußeren Enden die Rotoren oder Rotoreinheiten tragen, sind als Teil der Seitenwände ausgebildet oder können die Seitenwände bilden oder sind über eine Aufnahmeeinrichtung oder Befestigungselemente mit den Seitenwänden Verbunden. Die Tragstrukturen sind dann sternförmig ausgerichtet und auf einen Zentralkörper oder das Zentrum des Grundkörpers hin orientiert und folgen kollinear der Ausrichtung der Seitenwände. Die Tragstrukturen sind in einer Ausgestaltung werkzeuglos demontierbar, wodurch sich der Multicopter für einen Transport leicht zusammenlegen und für einen Einsatz leicht montieren lässt.

Die Erfindung sieht vor, dass die Seitenwände jedes der Segmente umfänglich umgeben. Die Seitenwände sind Teil einer tragenden Struktur des Grundkörpers und bilden vorteilhafterweise den gesamten Umfang der jeweiligen Segmente. Der segmenthafte Aufbau des Grundkörpers bedingt, dass einige Seitenwände im Inneren des Grundkörpers verlaufen und in Richtung auf das Zentrum oder die Mitte des Grundkörpers orientiert angeordnet sind, während die anderen, die äußeren Seitenwände den äußeren Umfang des Grundkörpers begrenzen. Wenn die Seitenwände die Segmente umfänglich umgeben, wird eine stabile Segmentstruktur erreicht, wodurch der Innenbereich der Segmente den Raum für den Energiespeicher bereitstellt, während die Seitenwände selbst Kräfte aufnehmen und Kräfte übertragen und die Stabilität des Grundkörpers bewirken. Durch die Ausgestaltung der Einführöffnung in oder entgegen der Auftriebsrichtung sind die Seitenwände entsprechend vertikal orientiert und nehmen die während des Flugbetriebes auftretenden Kräfte optimiert auf. Innerhalb der Segmente sind die Energiespeicher Last übertragend angeordnet. Erfindungsgemäß weisen die Energiespeicher die Form der Segmente auf oder weisen zumindest eine korrespondierende Formgebung auf, sodass eine optimierte Raumausnutzung erfolgen kann. **In** einer Ausgestaltung füllen die Energiespeicher die Segmente vollständig oder im Wesentlichen aus. Der oder die Energiespeicher weisen ein starres Gehäuse auf und sind als Strukturteil in den Segmenten und/oder Aufnahmeeinrichtungen verankert. Dadurch können die Energiespeicher als Last übertragende Komponenten verwendet werden, wodurch die Konstruktion steifer wird bzw. die übrige Tragkonstruktion des Grundkörpers leichter ausgeführt werden kann.

Durch die Segmentierung des Grundkörpers über die Seitenwände und die Tragstrukturen ist es möglich, die Energiespeicher optimal zu positionieren. Die Energiespeicher sind vergleichsweise schwere Komponenten, die innerhalb der Segmente des Grundkörpers möglichst nah an dem Zentrum des Grundkörpers angeordnet werden können. Durch die Anordnung und Orientierung der Einführrichtung in oder entgegen der Auftriebsrichtung, also von oben oder von unten, werden die massereichsten Elemente eines Multicopters, nämlich die Energiespeicher, zentral angeordnet und sind einfach für einen möglichst schnellen Austausch zugänglich. Dadurch werden lange Wartezeiten durch fest eingebaute Energiespeicher vermieden. Auswechselbare Energiespeicher können durch die vertikale Orientierung der Fügerichtung schnell eingebaut werden. Durch die Integration der Energiespeicher innerhalb der Struktur des Grundkörpers wird der möglichst gering zu haltende Bauraum effizient genutzt. Gleichzeitig werden die Flugeigenschaften verbessert und der Energieverbrauch aufgrund der optimalen Positionierung verringert.

Insbesondere sind die den Grundkörper umgebenen äußeren Seitenwände miteinander verbunden, sodass sich ein geschlossener Umfang des Grundkörpers einstellt. Die nach innen ragenden inneren Seitenwände trennen benachbarte Segmente voneinander und bilden somit jeweils eine Seitenwand für zwei benachbarte Segmente. Nach innen ragende Seitenwände und die den Grundkörper umgebenden Seitenwände sind miteinander verbunden und bilden die Skelettstruktur des Grundkörpers aus. Die Seitenwände müssen nicht geschlossenwandig ausgebildet sein, sondern können Löcher, Ausnehmungen oder Durchbrüche oder auch eine Fachwerkstruktur aufweisen.

Die Rotoren sind in einer Ausgestaltung jeweils einzeln angetrieben, insbesondere über einen dem jeweiligen Rotor zugeordneten Elektromotor. Wenn der Antrieb unmittelbar an der Rotorachse angeordnet ist, dienen die Tragstrukturen lediglich der Kraftübertragung. Grundsätzlich besteht auch die Möglichkeit, dass ein Antriebsmotor oder mehrere Antriebsmotoren an oder in dem Grundkörper angeordnet ist oder sind und die Rotoren beispielsweise über Wellen oder andere Kraftübertragungseinrichtungen angetrieben werden, die durch die Tragstrukturen hindurchgeführt oder an diesen entlang geführt werden. Dann dienen die Tragstrukturen zusätzlich zur Aufnahme und Schutz der Kraftübertragungseinrichtungen und/oder zur Durchleitung von Kraftübertragungsmedien.

In einer Ausgestaltung sind in den Segmenten und/oder in oder an den Aufnahmeeinrichtungen Befestigungseinrichtungen und/oder Befestigungselemente zum Festlegen der Energiespeicher angeordnet und/oder ausgebildet. Die Befestigungselemente und/oder Befestigungseinrichtungen dienen insbesondere zur formschlüssigen Festlegung der Energiespeicher innerhalb der Segmente bzw. Aufnahmeeinrichtungen für die Energiespeicher, sodass eine schnelle und wiederholte Festlegung und Entfernung der Energiespeicher möglich ist. Sofern die Energiespeicher unmittelbar in den Segmenten festgelegt werden, kann dies beispielsweise über Klettverschlüsse, Klipse, Haken, Klammern, Federn, Schieber oder andere Formschlusselemente erfolgen. Zusätzlich oder alternativ kann eine Magnetsicherung oder eine Sicherung über Gurte, Spangen, Schieber o. ä. erfolgen. Ein oder mehrere Energiespeicher können in Aufnahmeeinrichtungen angeordnet sein, beispielsweise um Energiespeicherpakete zu bilden, die aus Einzelkomponenten zusammengesetzt sind. Die Aufnahmeeinrichtungen können mit entsprechenden Kontakten versehen sein, die korrespondierende Kontakte an dem Grundkörper im verriegelten Zustand berühren und dadurch eine Energieübertragung ermöglichen.

Die Segmente sind in einer Ausgestaltung bei einer offenen Gitterstruktur des Grundkörpers auf der der Einführöffnung gegenüberliegenden Seite geschlossen ausgebildet oder weisen eine Sperre auf, sodass der innerhalb des Segmentes aufgenommene Energiespeicher nicht herausfallen kann. Die Sperre kann beispielsweise ein vollständig oder teilweise umlaufender, in das Segment hineinragender Rand oder Vorsprung sein. Ebenso können mehrere, in den Innenumfang des Segmentes hineinragender Vorsprünge oder Stege zwischen den nach innen ragenden Segmenten die gegenüberliegende Seite der Einführöffnung schließen, ohne eine vollständige, geschlossene Oberfläche auszubilden. Die Vorsprünge oder Stege können auch radial nach innen ragen.

**In** einer anderen Ausgestaltung kann alternativ oder ergänzend zu der Sperre oder Sperrvorrichtung an dem Grundkörper die Aufnahmevorrichtung des Energiespeichers mit einer solchen Sperrvorrichtung versehen sein, welche durch Magnetismus und/oder durch Federkraft und/oder durch eine andere mechanische Umsetzung Stege, Stifte, Haken, Riegel oder Keile ausfährt, um sich innerhalb des Segments mit dem Grundkörper zu koppeln und ein Herausfallen der Energiespeicher zu verhindern und/oder den elektrischen Kontaktschluss zwischen Aufnahmevorrichtung und Grundkörper zu sichern. Als Gegenpart können sich entsprechende Aussparungen, Führungen, Nuten, Ösen, Schienen, Kanten oder Absätze in oder an den Segmentinnenwänden des Grundkörpers befinden, die das Sperren unterstützen, indem sie die mechanischen oder magnetischen Sperrelemente aufnehmen, führen und/oder festhalten.

Der Einführöffnung kann eine Abdeckung zugeordnet sein, über die der Einführschacht und das Segment mit dem darin eingeführten Energiespeicher abgedeckt werden kann, um den Energiespeicher vor Umwelteinflüssen zu schützen.

An dem Grundkörper kann zunächst eine Halterung für zumindest einen Zusatzenergiespeicher, eine Zusatzkomponente und/oder eine Traglast angeordnet sein. Die Halterung kann beispielsweise zur Aufnahme von Kameras dienen. Ebenso können an der Halterung oder in der Halterung zu transportierende Objekte aufgenommen werden, beispielsweise Werkzeuge oder Versorgungsgüter, um an unzugänglichen Stellen Personen zu versorgen.

Vorteilhafterweise sind die Segmente gleichförmig ausgebildet, wodurch sich eine Kostenreduzierung bei der Herstellung der Energiespeicher und der Aufnahmevorrichtung der Energiespeicher erzielen lässt. Darüber hinaus sind die innerhalb der Segmente angeordneten Energiespeicher dann beliebig in jedem Segment einzusetzen, sodass nur ein Typ von Energiespeicher und/oder Aufnahmevorrichtung vorrätig gehalten werden muss. Damit können innerhalb der Aufnahmevorrichtung unterschiedliche Typen von Energiespeicher Verwendung finden. Auf diese Art wird ein hoher Grad an Modularität bei vergleichsweise geringen Produktionskosten ermöglicht.

An dem äußeren Ende der jeweiligen Tragstrukturen ist in einer Ausgestaltung eine Rotoreinheit mit einem Rotor und einem Elektromotor angeordnet, die als ein Modul zusammengefasst sind. Die Rotoren sind in einer Ausgestaltung in einer gemeinsamen Ebene angeordnet, alternativ können die Rotoren auch in Auftriebsrichtung versetzt zueinander in mehreren Ebenen angeordnet sein, beispielsweise um keine Kollision der Rotorblätter zu bewirken.

Innerhalb der Segmente kann jeweils zumindest eine Trennwand angeordnet sein, sodass mehrere Energiespeicherelemente voneinander separiert innerhalb eines Segmentes angeordnet werden können. Sowohl die Trennwand als auch die Seitenwände können eine durchbrochene Struktur aufweisen.

Der Grundkörper, zumindest die Seitenwände und die Tragstrukturen, sind vorteilhafterweise aus einem Metall, insbesondere einem Leichtmetall oder einer Leichtmetalllegierung ausgebildet.

Der Umfang des Grundkörpers, und die radial nach außenragenden Tragstrukturen, kann rund, dreieckig, viereckig oder polygonalen ausgebildet sein. Es können zwei, drei, vier, fünf oder sechs Tragstrukturen oder auch mehr Tragstrukturen an dem Grundkörper angeordnet sein. Die Tragstrukturen können eine entsprechende Anzahl von Segmenten bilden.

Die Seitenwände können auch nicht parallel zueinander orientiert sein, sodass der durch die Seitenwände gebildete Einführschacht in Einführrichtung sich verengt, wodurch eine Zentrierung des eingeführten Energiespeichers bzw. der eingeführten Aufnahmeeinrichtung erfolgt. Darüber hinaus kann durch die nicht parallele Ausgestaltung der Schachtwände eine Klemmwirkung bereitgestellt werden, um die innerhalb des Segmentes aufgenommene Komponente zu fixieren. Der Einführschacht für den Energiespeicher kann durchgängig sein, ebenso kann im Zentralkörper des Grundkörpers ein durchgängiger Schacht oder ein Einführschacht für eine weitere Komponente ausgebildet sein.

Die Tragstrukturen für die Rotoren oder Rotoreinheiten können auswechselbar an dem Außenumfang des Grundkörpers befestigt sein. Dazu sind an den Seitenwänden entsprechende Aufnahmeeinrichtungen angeordnet, in denen die Tragstrukturen eingeführt und verriegelt bzw. befestigt werden.

Die Anzahl der Segmente kann der Anzahl der Rotoren bzw. Rotoreinheiten entsprechen, sodass sich ein gleichmäßiger, insbesondere symmetrischer Aufbau erreichen lässt. Bei drei Rotoreinheiten sind drei Segmente ausgebildet, wobei diese Segmente nicht unbedingt gleich groß sein müssen. Bei vier Rotoreinheiten sind entsprechend vier Segmente mit darin angeordneten Energiespeichern vorhanden. Theoretisch können beliebig viele Rotoreinheiten mit entsprechend beliebig vielen Segmenten ausgebildet werden, eine zum gegenwärtigen Zeitpunkt übliche maximale Anzahl an Rotoreinheiten sind sechs bis acht Rotoreinheiten mit entsprechend sechs bis acht Segmenten.

Nachfolgend werden Ausführungsbeispiele der Erfindung anhand der beigefügten Figuren näher erläutert. Es zeigen:
Figur 1 - eine schematische Darstellung mehrerer Ausgestaltungen in Draufsicht;
Figur 2 - eine Variante mit sechs Tragstrukturen ohne Rotoreinheiten;
Figur 3 - die Ausgestaltung gemäß Figur 2 mit eingesetzten Energiespeichern;
Figur 4 - die Ausgestaltung gemäß Figur 3 mit einer Abdeckung;
Figur 5 - eine Variante der Figur 2 mit einem zentralen Schacht;
Figur 6 - eine Variante mit einem kreisförmigen Grundkörper;
Figur 7 - eine Seitenansicht der Figur 6;
Figur 8 - eine perspektivische Ansicht der Figur 6 mit eingesetzten Energiespeichern;
Figur 9 - eine Variante der Figur 6 mit vier Tragstrukturen;
Figur 10 - eine Variante der Figur 2 mit vier Tragstrukturen;
Figur 11 - eine Variante der Figur 5 mit quadratischen Einführschächten;
Figur 12 - eine Variante der Figur 2 mit Seitenwänden ohne Aufnahmeeinrichtungen für Tragstrukturen;
Figur 13 - eine Variante der Figur 2 mit vier Einführschächten;
Figur 14 - die Ausgestaltung gemäß Figur 13 mit eingesetzten Energiespeichern;
Figur 15 - eine Variante der Figur 2 mit Trennwänden;
Figur 16 - die Ausführungsform gemäß Figur 15 mit eingesetzten Energiespeichern;
Figur 17 - eine Variante der Figur 15 mit umfänglich angeordneten Trennwänden;
Figur 18 - eine Variante der Figur 2 mit durchbrochenen Seitenwänden;
Figur 19 - eine Variante der Figur 4 mit einer obenseitigen Abdeckung;
Figur 20 - eine Variante der Figur 4 mit einer Halterung;
Figur 21 - eine Variante der Figur 2 mit einer nach unten geöffneten Einführöffnung und Zusatzenergiespeichern; sowie
Figur 22 - eine Untenansicht gemäß Figur 4.

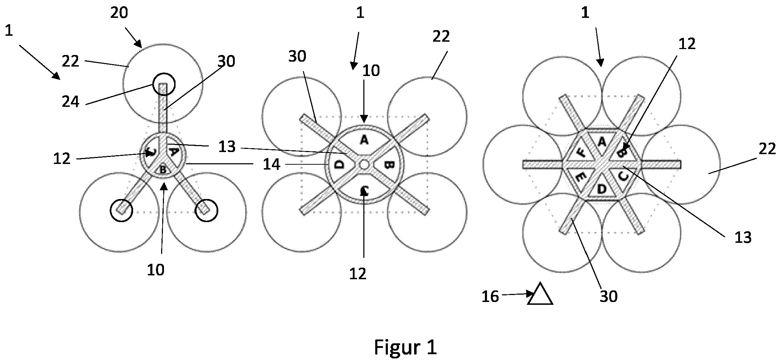

**In** der Figur 1 sind drei unterschiedliche Ausführungsformen eines Multicopters 1 in Draufsicht in schematische Darstellung gezeigt. Die linke Darstellung der Figur 1 zeigt einen Multicopter 1 mit drei Rotoreinheiten 20, die jeweils aus einem Rotor 22 und einem Antrieb 24 bestehen. Der Antrieb 24 ist insbesondere als ein Elektromotor ausgebildet und kann mit oder ohne Getriebe mit dem jeweiligen Rotor 22 gekoppelt sein. Um die Rotoren 22 herum, die insbesondere mehrflügelig ausgebildet sein können, können Rahmen oder Schutzeinrichtungen angeordnet sein, um die Rotorblätter vor Beschädigungen zu schützen und umgekehrt eine Gefährdung durch sich drehende Rotorblätter zu vermeiden oder zu minimieren. Die drei Rotoreinheiten 20 sind jeweils an einer Tragstruktur 30 angeordnet, die rohrförmig oder als Träger ausgebildet sind. Die Tragstrukturen 30 ragen von einem Grundkörper 10, der in dem dargestellten Ausführungsbeispiel kreisförmig ausgebildet ist, nach außen. Die Tragstrukturen 30 laufen innerhalb des Grundkörpers 10 auf ein gemeinsames Zentrum hin und treffen sich dort. **In** dem dargestellten Ausführungsbeispiel unterscheiden sich die Winkel zwischen den jeweiligen Tragstrukturen 30, wobei zwei Winkel gleich ausgebildet sind. Grundsätzlich besteht auch die Möglichkeit, einen gleichwinkligen Aufbau zwischen den Tragstrukturen 30 zu wählen.

Die Tragstrukturen 30 ragen nach außen über den äußeren Umfang des Grundkörpers 10 hinaus und laufen in einem Zentrum zusammen, sodass sich innerhalb des Grundkörpers 10 drei Segmente 12 ausbilden, die mit den Buchstaben A, B und C bezeichnet sind. Die Segmente A und C sind gleich ausgebildet, das Segment B ist aufgrund des kleineren Winkels zwischen den beiden Tragstrukturen 30 kleiner. Die nach innen ragenden Seitenwände 13 der Segmente 12 werden durch die Tragstrukturen 30 ausgebildet. Die kreisbogenförmige Außenwand 14, die sich als Bogenabschnitt zwischen den Tragstrukturen 30 erstreckt, bildet den äußeren Abschluss der Segmente 12. Alle Seitenwände 13, 14 sind miteinander verbunden und bilden ein starres Gerüst, wobei die Segmente 12 als Freiräume ausgebildet sind. An oder in dem Grundkörper 10 ist noch eine nicht dargestellte Steuerungselektronik zur Ansteuerung der einzelnen Rotoreinheiten 20 angeordnet, gegebenenfalls ergänzt um eine Sendeeinrichtung und einen Empfänger für eine Fernsteuerung. Sofern die Antriebe 24 an den äußeren Enden der Tragstrukturen 30 angeordnet sind, bedarf es lediglich einer elektrischen Zuleitung zu den Elektromotoren 24, um die dezentralen Antriebe 24 mit der benötigten Energie zu versorgen. Alternativ zu einer solchen Ausgestaltung können die Antriebe 24 an einem anderen Ort der Tragstrukturen 30 oder an dem Grundkörper 10 angeordnet sein. Dann werden die Rotoren 22 über Kraftübertragungseinrichtungen wie Wellen oder Riemen oder dergleichen angetrieben. Diese Kraftübertragungseinrichtungen werden vorzugsweise in oder entlang der Tragstrukturen 30 geführt.

Die Tragstrukturen 30 dienen dazu, die Rotoren 22 bzw. Rotoreinheiten 20 mit dem Grundkörper 10 zu verbinden, die geometrische Zuordnung der Rotoren 22 zueinander zu gewährleisten und um die auftretenden Kräfte zu übertragen.

Eine alternative Ausgestaltung des Multicopters 1 ist in der mittleren Darstellung der Figur 1 gezeigt, bei dem vier Rotoren 22 sternförmig um einen wiederum kreisförmigen Grundkörper 10 herum angeordnet sind. Die vier Tragstrukturen 30, die balkenartig ausgebildet sind, laufen auf das Innere des Grundkörpers 10 hin und treffen sich in einem Zentralbereich, wobei die Tragstrukturen 30 nicht senkrecht aufeinander stehen. Dadurch ergibt sich ein rechteckiger, nicht quadratischer Umriss, wenn die äußeren Enden der Tragstrukturen 30 miteinander verbunden werden. Die vier Segmente 12, die mit dem Buchstaben A bis D bezeichnet sind, werden wiederum von den Seitenwänden 13 und 14 vollständig umrahmt und gebildet. Die beiden einander gegenüberliegenden Segmente A, C bzw. B, D sind gleichförmig ausgebildet. Aufgrund der nicht rechtwinkligen Orientierung sind die paarweisen Segmente A, C bzw. B, D unterschiedlich geformt.

Eine weitere Ausgestaltung eines Multicopters 1 ist in der rechten Darstellung der Figur 1 gezeigt, bei der insgesamt sechs Rotoren 22 bzw. Rotoreinheiten 20 an sternförmig orientierten Tragstrukturen 30 angeordnet sind. Die Längserstreckungen der Tragstrukturen 30 treffen sich in einem gemeinsamen Zentrum, wobei die benachbarten Tragstrukturen 30 zueinander in einem gleichen Abstand bzw. in einem gleichen Winkel orientiert sind. Der Grundkörper 10 ist somit als ein gleichseitiges Sechseck ausgebildet, die Segmente 12, die mit A bis F bezeichnet sind, sind im Wesentlichen dreieckig und gleichförmig. In der rechten Darstellung der Figur 1 ist zudem eine Aufnahmeeinrichtung 16 gezeigt, die als Halterung, Kasten, Gehäuse oder Ähnliches ausgebildet ist und zur Aufnahme eines nicht dargestellten Energiespeichers oder mehrerer, nicht dargestellter Energiespeicher dient. Die Aufnahmeeinrichtung 16 ist so ausgebildet, dass sie innerhalb der Segmente 12 eingesetzt und darin befestigt werden kann. In dem dargestellten Ausführungsbeispiel mit dreieckigen Segmenten 12 ist die Aufnahmeeinrichtung 16 ebenfalls dreckig ausgebildet. Innerhalb der Aufnahmeeinrichtung 16 können unterschiedliche Energiespeicher oder auch nur ein Energiespeicher mit einer dreieckigen Kontur angeordnet und befestigt sein. Neben Befestigungsmitteln oder Befestigungseinrichtungen zum Fixieren der Aufnahmeeinrichtung 16 innerhalb des jeweiligen Segmentes 12 können daran Kontakte oder Stecker oder dergleichen angeordnet oder ausgebildet sein, um eine elektrische Kontaktierung mit entsprechenden Anschlüssen an dem Grundkörper 10 zu ermöglichen. Die Aufnahmeeinrichtung 16 ist je nach Form des Segmentes 12 ausgebildet und korrespondiert vorteilhafterweise mit der Innenkontur des jeweiligen Segmentes 12, sodass eine optimale Raumausnutzung erfolgen kann.

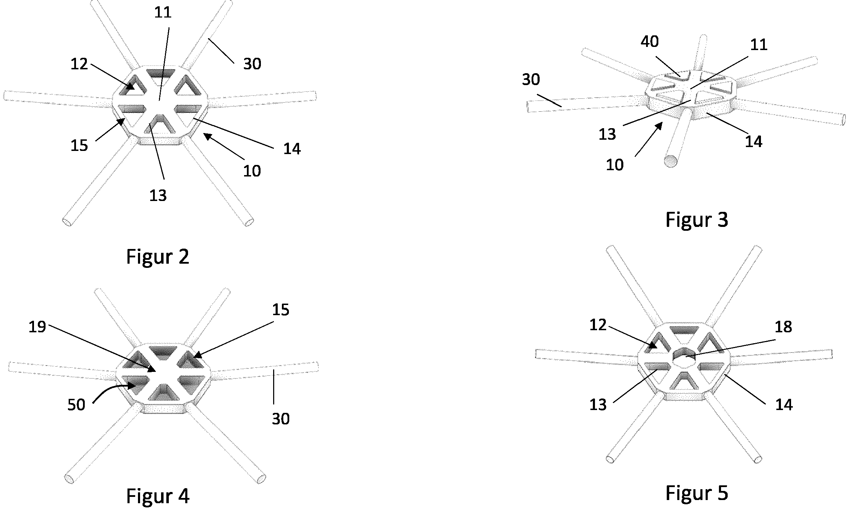

In der Figur 2 ist eine Variante des Multicopters gemäß der rechten Darstellung der Figur 1 gezeigt. Die Rotoren oder Rotoreinheiten sind in der Figur 2 und in den weiteren Figuren aus Gründen der Übersichtlichkeit nicht dargestellt. Die Tragstrukturen 30, die in dem dargestellten Ausführungsbeispiel gleichbeabstandet zueinander in einem Winkel von 60° ausgerichtet sind, sind in Richtung auf ein Grundkörperzentrum 11 ausgerichtet. In dem dargestellten Ausführungsbeispiel schneiden sich die Längsachsen der Tragstrukturen 30 in einem gemeinsamen Punkt, sodass das Grundkörperzentrum 11 auch der Schwerpunkt des Grundkörpers 10 darstellt. Der Grundkörper 10 ist wieder sechseckig ausgebildet, in den Eckbereichen münden die Tragstrukturen 30, die auch durchgängig ausgebildet sein können, sodass eine stabile Struktur erreicht wird. Die sechs Segmente 12 werden durch die nach innen ragenden Seitenwände 13 der nach innen verlaufenden Tragstrukturen 30 sowie die verbindenden Seitenwände 14 gebildet, wobei die verbindenden, den Umfang des Grundkörpers 10 definierenden Seitenwände 14 miteinander und/oder mit den Tragstrukturen 30 verbunden sind. Der Grundkörper 10 kann beispielsweise über zwei sternförmige, scheibenartige Abdeckelemente gebildet sein, die durch die Seitenwände 13, 14 miteinander verbunden sind. Die Tragstrukturen 30 können die Seitenwände 13 ausbilden oder mit den Seitenwänden 13, 14 verbunden sein, sodass sich ein starres, gerüstartiges, durch die Segmente 12 durchbrochenes Konstrukt ergibt. An der Oberseite des Grundkörpers 10 ist eine Einführöffnung 15 in dem jeweiligen Segment 12 ausgebildet. In dem dargestellten Ausführungsbeispiel entspricht die Größe der Einführöffnung 15 der umfänglichen Kontur des Segmentes 12. Grundsätzlich besteht ebenso die Möglichkeit, dass die Einführöffnung 15 eine andere Form als die des dazugehörigen Segmentes 12 aufweist.

In der Figur 3 ist die Ausgestaltung des Multicopters 1 mit dem Aufbau gemäß Figur 2 mit eingesetzten Energiespeichern 40 gezeigt. Die Energiespeicher 40 sind korrespondierend zu der Form der Segmente 12 ausgebildet und durch die Einführöffnung 15 in die Segmente 12 eingesetzt. Die Einführöffnung 15 für den Energiespeicher 14 ist in vertikaler Richtung orientiert ausgebildet, sodass der Energiespeicher in das jeweilige Segment 12 von oben bzw. unten eingesetzt werden kann. In dem dargestellten Ausführungsbeispiel füllen die sechs Energiespeicher 40 die sechs Segmente 12 vollständig aus und stehen über die Oberfläche der Oberseite des Grundkörpers 10 hinaus. Durch die nach oben offene Ausgestaltung der Segmente 12 ist es möglich, unterschiedlich hohe Energiespeicher 40 einzusetzen. Beispielsweise können für unterschiedlich lange Einsatzzeiten unterschiedliche Energiespeicher 40 mit unterschiedlichen Kapazitäten in das jeweilige Segment 12 eingesetzt werden, um eine optimierte Flugleistung zu erreichen. Alternativ kann auch eine unterschiedlich hohe Platzierung ein und derselben Energiespeicher gewählt werden, um den horizontalen Masseschwerpunkt des Fluggerätes, in Einklang mit der Masse und Lage einer Nutzlast, optimal einzustellen. Die Energiespeicher 40 sind auswechselbar innerhalb der Segmente 12 eingesetzt und können durch die Einführöffnung 15 eingeführt und wieder entnommen werden. Innerhalb der Segmente 12 oder an dem Grundkörper 10 können Fixiereinrichtung in oder Befestigungselemente oder Befestigungseinrichtungen oder eine Kombination davon angeordnet oder ausgebildet sein, die ein ungewolltes Entfernen der Energiespeicher 40 aus den Segmenten 12 verhindern. Insbesondere Formschlusselemente wie Hinterschnitte, Hinterschneidungen, Federn, Klettverschlüsse, Gurte, Klipse, Riegel oder Schieber und oder Kraftschlusseinrichtungen wie Magnete können die Energiespeicher 40 oder die in einer korrespondierend ausgebildeten Aufnahmeeinrichtung 16 angeordneten Energiespeicher in den Segmenten 12 bzw. an dem Grundkörper 10 halten.

In der Figur 4 ist eine Ausgestaltung des Multicopters 1 gemäß Figur 2 gezeigt, bei dem an der Unterseite des Grundkörpers 10 die Segmente 12 über eine Abdeckung 50 verschlossen sind. Die Abdeckung 50 erstreckt sich über die gesamte Unterseite des Grundkörpers 10 und verhindert, dass Energiespeicher 40 oder andere in den Segmenten 12 untergebrachte Komponenten herausfallen. Darüber hinaus schützt die Abdeckung 50 die innerhalb der Segmente 12 aufgenommenen Komponenten vor mechanischen Beschädigungen sowie Umwelteinflüssen. Der Figur 4 ist zu entnehmen, dass die Tragstrukturen 30 von einem Zentralkörper 19 abgehen oder sich zu einem Zentralkörper 19 vereinigen. In dem dargestellten Ausführungsbeispiel ist der Zentralkörper 19 massiv bzw. nach oben hin geschlossen ausgebildet.

In der Figur 5 ist eine Variante der Figur 2 dargestellt, bei dem innerhalb des Zentralkörpers 19 ein Schacht 18 oder einer Ausnehmung eingearbeitet ist, um einen Durchgang im Zentrum entlang der Gierachse zu ermöglichen. So können Funktions-/Komponenten, die sowohl über als auch unter dem Grundkörper 10 angebracht werden und miteinander in Verbindung stehen, in Gierachsenrichtung zueinander unabhängig drehbar sein, indem etwa eine Welle, z.B. eine Hohlwelle und/oder Schleifringe und/oder andere drehbare Verbindungselemente und Gelenke innerhalb des Schachtes 18 verbaut werden. Auf diese Weise können beide Komponentenseiten elektrisch, pneumatisch, hydraulisch, mechanisch oder auf andere Weise zueinander in Verbindung stehen und unabhängig voneinander drehbar sein. In einer weiteren Nutzanwendung ist eine elektrische Winde mit Drahtseil oberhalb des Grundkörpers 10 platziert, während unterhalb des Grundkörpers 10 eine Transportbox an diesem Drahtseil hängt. Dadurch, dass sich die Winde oberhalb des Grundkörpers 10 befindet und das Drahtseil durch den Schacht 18 geführt wird, lässt sich die Transportbox wesentlich näher nach oben an die Unterseite des Grundkörpers 10 heranziehen, was wiederum einem besseren Flugverhalten dient, da der horizontale Masseschwerpunkt näher in das Zentrum der Rotoren rückt. Alternativ dient die Ausnehmung oder der Schacht 18 zur Verringerung des Gewichtes. Die Tragstrukturen 30 treffen unter Ausbildung der nach innen orientierten Seitenwände 13 in der Mitte zusammen und sind miteinander verbunden. In dem dargestellten Ausführungsbeispiel sind sechs Tragstrukturen 30 vorgesehen, sodass die Ausnehmung oder der Schacht 18 eine sechseckige Kontur aufweist. Sofern eine Abdeckung 50 gemäß Figur 4 an dem Grundkörper 10 angeordnet ist, kann der Schacht 18 an der Unterseite verschlossen werden.

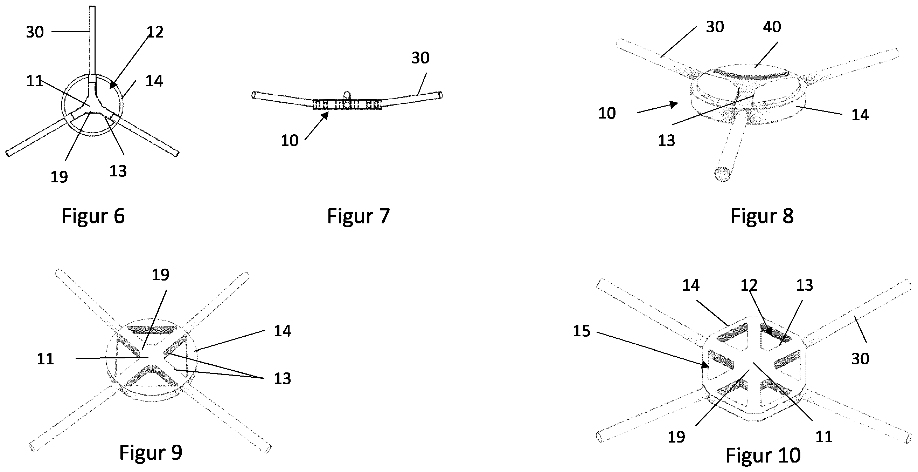

In der Figur 6 ist eine weitere Variante des Multicopters 1 ohne Rotoren dargestellt. Die Tragstrukturen 30 sind gleichwinkelig zueinander beabstandeten an dem Zentralkörper 19 angeordnet und über drei Segmentbögen als äußere Seitenwände 14 miteinander verbunden. Die drei dadurch ausgebildeten Segmente 12 können mit Energiespeichern besetzt werden, die in der Figur 6 nicht gezeigt sind. Die Tragstrukturen 30 können auswechselbar an dem Grundkörper und insbesondere an dem Zentralkörper 19 festgelegt sein.

Figur 7 zeigt die Anordnung und Orientierung der Tragstrukturen 30 an dem Grundkörper 10. Die Unterseite des Grundkörpers 10 ist eben oder flach ausgebildet, die Tragstrukturen 30 sind schräg nach oben orientiert an dem Grundkörper 10 festgelegt, sodass der Schwerpunkt des Multicopters 1 unterhalb der Ebene befindlich ist, in der sich die Rotoren drehen bzw. unterhalb der Ebene, in der die Befestigungen für die Rotoreinheiten 20 liegt. Dadurch ergibt sich ein stabileres Flugverhalten. In einer Variante können die Rotoren in unterschiedlichen Ebenen zueinander angeordnet sein, beispielsweise indem drei Tragstrukturen 30 nach oben und drei Tragstrukturen 30 nach unten orientiert sind

Figur 8 zeigt eine perspektivische Darstellung der Ausführungsform gemäß Figur 6 mit eingesetzten Energiespeichern 40, die ebenfalls über die obere Oberfläche des Grundkörpers 10 hinausstehen. Die Seitenwände 13 werden von dem Zentralkörper 19 und der kreisförmigen, den Umfang des Grundkörpers 10 bildenden Seitenwand 14 gebildet.

Der Figur 9 ist eine Variante mit einer im Wesentlichen runden Außenkontur des Grundkörpers 10 gezeigt, bei der die Segmente 12 im Wesentlichen als geradlinige Dreiecke ausgebildet sind. Die äußere Seitenwand 14 weist, im Gegensatz zu den äußeren Seitenwänden 14 der vorherigen Ausführungsformen, keine gleichmäßige Wandstärke auf.

In der Figur 10 ist eine Variante der Figur 2 dargestellt, bei der nicht an allen sechs Ecken des Grundkörpers 10 Tragstrukturen 30 mit an den äußeren Enden angeordneten Rotoren oder Rotoreinheiten gezeigt ist, vielmehr sind lediglich vier Tragstrukturen 30 jeweils an gegenüberliegenden Ecken des sechseckigen Grundkörpers 10 angeordnet. Insgesamt ergibt sich so eine rechteckige, nicht quadratische Struktur, wobei auf einer Seite einer jeden Tragstruktur 30 ein Segment 12 und auf der anderen Seite zwei Segmente 12 vorhanden sind. Aufgrund der symmetrischen Ausgestaltung ergibt sich eine gleichmäßige Gewichtsverteilung.

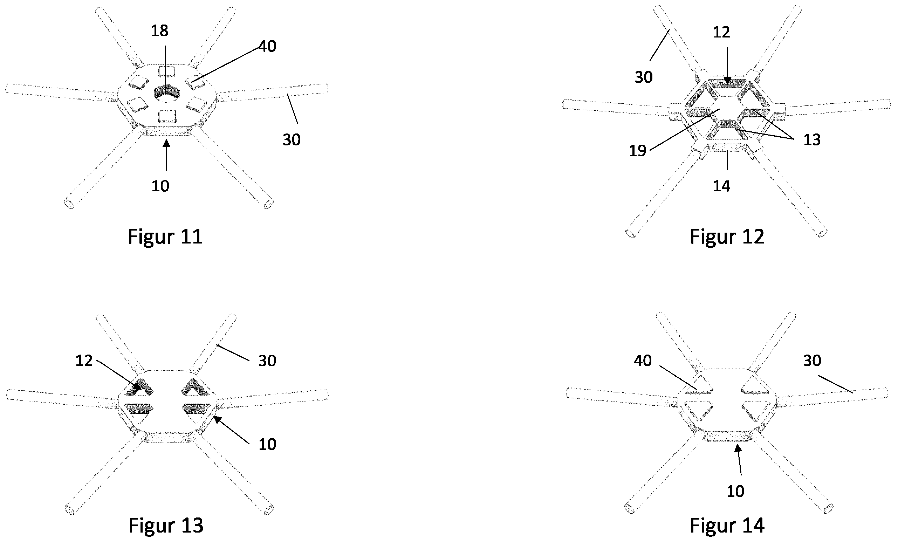

In der Figur 11 ist eine weitere Variante eines Multicopters mit sechs Tragstrukturen 30 und sechs Segmenten 12 dargestellt, wobei die Segmente 12 quadratisch ausgebildet sind und somit die Seitenwände der Segmente nicht parallel oder entlang der Längserstreckung der Tragstrukturen 30 verlaufen. Innerhalb der Segmente sind die Energiespeicher 40 eingesetzt, der zentrale Schacht 18 ist wieder sechseckig ausgebildet.

In der Figur 12 ist der Grundkörper 10 des Multicopters ohne durchgehende Tragstrukturen 30 ausgebildet, vielmehr enden die Tragstrukturen 30 in Aufnahmen an der Außenseite der äußeren Seitenwände 14. Nach innen ragen lediglich Seitenwände 13, die auf einen sechseckigen Zentralkörper 19 zulaufen.

In der Figur 13 sind sechs Tragstrukturen 30 an dem sechseckigen Grundkörper 10 angeordnet, die alle zum Zentrum des Grundkörpers 10 zeigen, jedoch sind nur vier Segmente 12 innerhalb des Grundkörpers 10 ausgebildet, sodass zwischen zwei benachbarten Tragstrukturen 30 kein herausgebrochenes Segment oder freies Segment zur Aufnahme eines Energiespeichers ausgebildet ist. **In** der Figur 14 ist die Variante gemäß Figur 13 mit eingesetzten Energiespeichern 40 gezeigt.

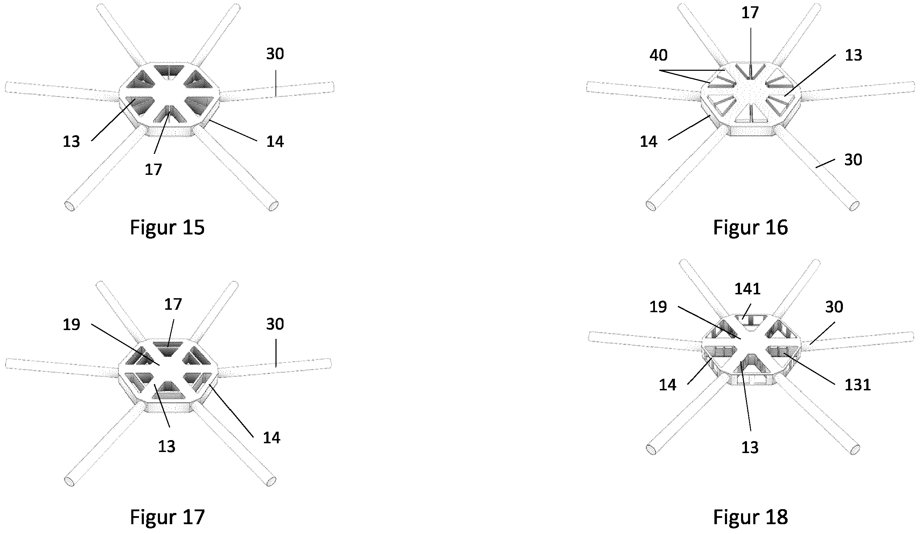

Eine weitere Ausgestaltung des Multicopters ist in der Figur 15 gezeigt, bei dem die sechs Segmente eines sechseckigen Grundkörpers mit sechs Tragstrukturen 30 durch eine Trennwand 17 geteilt sind. Die Segmente 12 werden weiterhin durch die nach innen ragenden Seitenwände 13 und die den äußeren Umfang des Grundkörpers 10 bildende Seitenwand 14 gebildet. Zur Trennung der eingesetzten Energiespeicher 40, die in der Figur 16 dargestellt sind, sind vergleichsweise dünne Trennwände 17 innerhalb der Segmente 12 angeordnet, die radial nach außen ragen und von einem Zentralkörper 19 nach außen zu der äußeren Seitenwand 14 verlaufen. Durch diese Trennwände 17 können mehrere separate und kleinere Energiespeicher 40 innerhalb eines Segmentes 12 sicher aufgenommen werden. Die Trennwände 17 können die Teilsegmente formen und darüber hinaus mit Befestigungseinrichtungen oder Kontaktelementen versehen sein, um eine Festlegung und elektrische Energieleitung zu der Steuerungseinrichtung und schließlich zu den Motoren zu ermöglichen.

Eine Variante der Ausgestaltung mit einer Trennwand 17 ist in der Figur 17 gezeigt, bei der die Trennwände 17 nicht radial nach außen orientiert sind, sondern parallel zu der umfänglichen Seitenwand 14 verlaufen. Sowohl für die radialen als auch für die in Umfangsrichtung orientierten Trennwände 17 gilt, dass nicht in allen Segmenten 12 die gleichen Trennwände 17 angeordnet sein müssen. Radiale und in Umfangsrichtung orientierte Trennwände 17 können gemeinsam an einem Grundkörper 10 angeordnet sein. Ebenso können Segmente 12 ohne Trennwände 17 mit Segmenten 12 mit Trennwänden 17 kombiniert werden.

**In** der Figur 18 ist eine Variante der Seitenwände 13, 14 gezeigt, die unterbrochen oder in einer Fachwerkstruktur mit Durchbrüchen 131, 141 ausgebildet sind. Die vorherigen Ausführungsformen zeigen überwiegend Seitenwände 13, 14 mit einer durchgängigen, geschlossenen Oberfläche, entweder als Teil der Tragstrukturen 30 oder als gesonderte Seitenwände. Zur Einsparung von Gewicht können die Seitenwände 13, 14 durchbrochen sein. Die nach innen ragenden Seitenwände 13 können parallel zu einer Außenwand der Tragstrukturen 30 orientiert und an den Seitenwänden 14 befestigt sein.

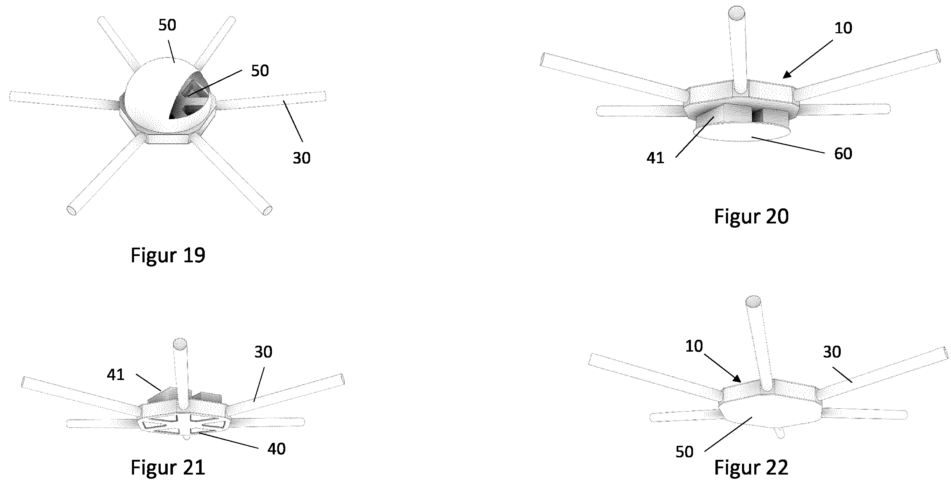

Eine weitere Variante ist in der Figur 19 gezeigt, bei der die Oberseite des Grundkörpers 10 über eine kugelförmige Abdeckung 50 geschützt ist. Unterhalb der Abdeckung 50 können Steuerungseinrichtungen, Instrumente oder andere Komponenten angeordnet sein. Ebenfalls kann unterhalb der oberen Abdeckung 50 Nutzlast aufgenommen werden, die an einen entsprechenden Ort transportiert werden soll. Weiterhin ist auf der Unterseite des Grundkörpers 10 eine Abdeckung 50 angeordnet, um ein Herausfallen der Energiespeicher 40 aus den Segmenten 12 zu vermeiden und/oder um einen mechanischen Schutz bereitzustellen.

In der Figur 20 ist einer Ansicht von schräg unten eine weitere Variante gezeigt, bei der an der Unterseite des Grundkörpers 10, die mit einer Abdeckung 50 verschlossen ist, eine Halterung 60 angeordnet ist, über die Zusatzkomponenten, beispielsweise zusätzliche Energiespeicher 41 an dem Grundkörper 10 festgelegt werden können. Die Halterung 60 kann auch mit einer Gitterstruktur versehen sein. Ebenso können Befestigungseinrichtungen, Kästen, Einschübe oder dergleichen vorgesehen sein, um die entsprechenden Zusatzkomponenten 41 daran festzulegen und bei Bedarf wieder abnehmen zu können.

In der Figur 21 ist in einer Ansicht von schräg unten eine Variante gezeigt, bei der die Einführöffnung auf der Unterseite des Grundkörpers 10 liegt. Die Energiespeicher 40 werden von unten in die als Einführschächte ausgebildeten Segmente eingeschoben und verriegelt. Auf der Oberseite des Grundkörpers 10 können dann Zusatzkomponenten oder zusätzliche Energiespeicher 41 aufgesetzt und einfach festgelegt werden.

Die Figur 22 zeigt in einer unten Ansicht die vollständig abgedeckte Unterseite des Körpers 10 durch die Abdeckung 50.

## Patentansprüche

1. Multicopter mit einem Grundkörper (10) und mehreren, an dem Grundkörper (10) angeordneten Rotoren (22), die mit zumindest einem Antrieb (24) gekoppelt sind und durch Drehung der Rotoren (22) Auftrieb und Vortrieb erzeugen und mit zumindest einem Energiespeicher (40), wobei
a. jeder Rotor (22) an einer Tragstruktur (30) befestigt ist, die von dem Grundkörper (10) von einem Grundkörperzentrum (11) weg nach außen ragt,
b. in dem Grundkörper (10) zumindest eine Aufnahmeeinrichtung (16) für einen Energiespeicher (40) angeordnet ist, über den der Antrieb mit Energie versorgt wird,
wobei der Grundkörper (10) in Segmente (12) unterteilt ist, die von inneren Seitenwänden (13) und äußeren, den äußeren Umfang des Grundkörpers (10) begrenzenden Seitenwänden (14) eingefasst sind, wobei die Segmente (12) die Aufnahmeeinrichtungen (16) bilden oder die Aufnahmeeinrichtungen (16) aufnehmen und eine Einführöffnung (15) für den oder die Energiespeicher (40) aufweisen, die in und/oder entgegen der Auftriebsrichtung orientiert ist, die inneren Seitenwände (13) auf das Grundkörperzentrum oder einen Zentralkörper (19) ausgerichtet sind und die Tragstrukturen (30) Teil der inneren Seitenwände (13) sind oder die inneren Seitenwände (13) ausbilden, wobei die Tragstrukturen (30) von dem Grundkörperzentrum (11) radial nach außen ragen, wobei jedes Segment (12) von inneren Seitenwänden (13) und äußeren Seitenwänden (14) umfänglich umgeben ist, wobei innerhalb der Segmente (12) und/oder Aufnahmeeinrichtungen (16) die Energiespeicher (40), die ein starres Gehäuse aufweisen, Last übertragend als Strukturbauteile verankert sind, **und** wobei die Energiespeicher (40) die Form der Segmente (12) aufweisen und die Segmente (12) und/oder die Aufnahmeeinrichtung (16) ausfüllen.

2. Multicopter nach Anspruch 1, **dadurch gekennzeichnet, dass** die den Grundkörper (10) umgebenden äußeren Seitenwände (14) miteinander verbunden sind.

3. Multicopter nach einem der voranstehenden Ansprüche, **dadurch gekennzeichnet, dass** die inneren und äußeren Seitenwände (13, 14) einen Einführschacht für die Aufnahmeeinrichtung (16) und/oder den Energiespeicher (40) bilden.

4. Multicopter nach einem der voranstehenden Ansprüche, **dadurch gekennzeichnet, dass** in den Segmenten (12) und/oder Aufnahmeeinrichtungen (16) Befestigungseinrichtungen und/oder Befestigungselemente zum Festlegen der Energiespeicher (40) angeordnet oder ausgebildet sind.

5. Multicopter nach einem der voranstehenden Ansprüche, **dadurch gekennzeichnet, dass** die Segmente (12) auf der gegenüberliegenden Seite der Einführöffnung (15) geschlossen ausgebildet sind oder ein Sperrelement aufweisen.

6. Multicopter nach einem der voranstehenden Ansprüche, **dadurch gekennzeichnet, dass** der Einführöffnung (15) eine Abdeckung (50) zugeordnet ist.

7. Multicopter nach einem der voranstehenden Ansprüche, **dadurch gekennzeichnet, dass** an dem Grundkörper (10) zumindest eine Halterung (60) für zumindest einen Zusatzenergiespeicher (41), eine Zusatzkomponente und/oder eine Traglast angeordnet ist.

8. Multicopter nach einem der voranstehenden Ansprüche, **dadurch gekennzeichnet, dass** die Segmente (12) gleichförmig ausgebildet und symmetrisch angeordnet sind.

9. Multicopter nach einem der voranstehenden Ansprüche, **dadurch gekennzeichnet, dass** an der Tragstruktur (30) eine Rotoreinheit (20) mit zumindest einem Rotor (22) und einem Elektromotor (24) angeordnet ist.

10. Multicopter nach einem der voranstehenden Ansprüche, **dadurch gekennzeichnet, dass** die Rotoren (20) in einer gemeinsamen Ebene oder in Auftriebsrichtung versetzt zueinander orientierten Ebenen angeordnet sind.

11. Multicopter nach einem der voranstehenden Ansprüche, **dadurch gekennzeichnet, dass** ein Segment (12) zumindest eine Trennwand (17) und/oder eine durchbrochene innere oder äußere Seitenwand (13, 14) aufweist.

12. Multicopter nach einem der voranstehenden Ansprüche, **dadurch gekennzeichnet, dass** der Grundkörper (10) aus Metall, insbesondere einer Leichtmetalllegierung ausgebildet ist.

## Claims

1. Multicopter with a main part (10) and multiple rotors (22) arranged on the main part (10), which are coupled to at least one drive (24) and generate lift and propulsion by rotating the rotors (22), and with at least one energy storage device (40), wherein
a. each rotor (22) is secured to a support structure (30) that protrudes outwards from the main part (10) away from a center (11) of the main part,
b. the main part (10) is equipped with at least one receiving device (16) for an energy storage device (40) via which the drive is supplied with energy,
wherein the main part (10) is divided into segments (12) which are enclosed by inner lateral walls (13) and outer lateral walls (14) delimiting the outer circumference of the main part (10), wherein the segments (12) form the receiving devices (16) or receive the receiving devices (16) and have an insertion opening (15) for the energy storage device(s) (40), said insertion opening being oriented in and/or opposite the lift direction, the inner lateral walls (13) being aligned with the center of the main part or a central body (19), and the supporting structures (30) are part of the inner lateral walls (13) or form the inner lateral walls (13), wherein the supporting structures (30) project radially outwards from the center (11), wherein each segment (12) is surrounded circumferentially by inner lateral walls (13) and outer lateral walls (14), wherein within the segments (12) and/or receiving devices (16), the energy storage devices (40), which have a rigid housing, are anchored as load-transmitting structural components, and wherein the energy storage devices (40) have the shape of the segments (12) and fill the segments (12) and/or the receiving device (16).

2. Multicopter according to claim 1, **characterized in that** the outer lateral walls (14) surrounding the main part (10) are connected to each other.

3. Multicopter according to one of the preceding claims, **characterized in that** the inner and outer lateral walls (13, 14) form an insertion shaft for the receiving device (16) and/or the energy storage device (40).

4. Multicopter according to one of the preceding claims, **characterized in that** fastening devices and/or fastening elements for securing the energy storage devices (40) are arranged or formed in the segments (12) and/or receiving devices (16).

5. Multicopter according to one of the preceding claims, **characterized in that** the segments (12) are closed on the opposite side of the insertion opening (15) or have a locking element.

6. Multicopter according to one of the preceding claims, **characterized in that** the insertion opening (15) is assigned a cover (50).

7. Multicopter according to one of the preceding claims, **characterized in that** at least one mount (60) for at least one additional energy storage device (41), an additional component and/or a load is arranged on the main part (10).

8. Multicopter according to one of the preceding claims, **characterized in that** the segments (12) are uniformly designed and arranged symmetrically.

9. Multicopter according to one of the preceding claims, **characterized in that** a rotor unit (20) with at least one rotor (22) and an electric motor (24) is arranged on the support structure (30).

10. Multicopter according to one of the preceding claims, **characterized in that** the rotors (20) are arranged in a common plane or in planes oriented relative to each other in the direction of lift.

11. Multicopter according to one of the preceding claims, **characterized in that** a segment (12) has at least one partition wall (17) and/or a perforated inner or outer lateral wall (13, 14).

12. Multicopter according to one of the preceding claims, **characterized in that** the main part (10) is made of metal, in particular a light metal alloy.

## Revendications

1. Multicoptère comprenant un corps de base (10) et plusieurs rotors (22) disposés sur le corps de base (10), qui sont couplés à au moins un entraînement (24) et génèrent une portance et une propulsion par la rotation des rotors (22), et comprenant au moins un dispositif de stockage d'énergie (40),
dans lequel
a. chaque rotor (22) est fixé à une structure porteuse (30) qui s'étend vers l'extérieur à partir du corps de base (10) depuis un centre (11) du corps de base,
b. dans le corps de base (10) est disposé au moins un dispositif de réception (16) pour un dispositif de stockage d'énergie (40) par lequel l'entraînement est alimenté en énergie,
sachant que
le corps de base (10) est subdivisé en segments (12) qui sont entourés par des parois latérales intérieures (13) et par des parois latérales extérieures (14) délimitant le pourtour extérieur du corps de base (10), les segments (12) formant les dispositifs de réception (16) ou recevant les dispositifs de réception (16) et présentant une ouverture d'insertion (15) pour le ou les dispositifs de stockage d'énergie (40), qui est orientée dans le sens de la portance et/ou en sens opposé à celle-ci, les parois latérales intérieures (13) étant alignées sur le centre du corps de base ou sur un corps central (19), et les structures porteuses (30) faisant partie des parois latérales intérieures (13) ou constituant les parois latérales intérieures (13),
les structures porteuses (30) s'étendent radialement vers l'extérieur à partir du centre (11) du corps de base,
chaque segment (12) est entouré sur son pourtour par des parois latérales intérieures (13) et par des parois latérales extérieures (14),
les dispositifs de stockage d'énergie (40) présentent un boîtier rigide et sont ancrés, en tant qu'éléments structurels transmettant la charge, à l'intérieur des segments (12) et/ou des dispositifs de réception (16), et
les dispositifs de stockage d'énergie (40) ont la forme des segments (12) et remplissent les segments (12) et/ou les dispositifs de réception (16).

2. Multicoptère selon la revendication 1,
**caractérisé en ce que** les parois latérales extérieures (14) entourant le corps de base (10) sont reliées entre elles.

3. Multicoptère selon l'une des revendications précédentes,
**caractérisé en ce que** les parois latérales intérieures et extérieures (13, 14) forment un puits d'insertion pour le dispositif de réception (16) et/ou le dispositif de stockage d'énergie (40).

4. Multicoptère selon l'une des revendications précédentes,
**caractérisé en ce que** des dispositifs de fixation et/ou des éléments de fixation destinés à fixer les dispositifs de stockage d'énergie (40) sont disposés ou formés dans les segments (12) et/ou dans les dispositifs de réception (16).

5. Multicoptère selon l'une des revendications précédentes,
**caractérisé en ce que** les segments (12) sont fermés sur le côté opposé à l'ouverture d'insertion (15) ou comportent un élément de blocage.

6. Multicoptère selon l'une des revendications précédentes,
**caractérisé en ce qu'**un couvercle (50) est associé à l'ouverture d'insertion (15).

7. Multicoptère selon l'une des revendications précédentes,
**caractérisé en ce qu'**au moins un support (60) pour au moins un dispositif de stockage d'énergie supplémentaire (41), pour un composant supplémentaire et/ou pour une charge est disposé sur le corps de base (10).

8. Multicoptère selon l'une des revendications précédentes,
**caractérisé en ce que** les segments (12) sont de conception uniforme et sont disposés symétriquement.

9. Multicoptère selon l'une des revendications précédentes,
**caractérisé en ce qu'**une unité de rotor (20) munie d'au moins un rotor (22) et d'un moteur électrique (24) est disposée sur la structure porteuse (30).

10. Multicoptère selon l'une des revendications précédentes,
**caractérisé en ce que** les rotors (20) sont disposés dans un plan commun ou dans des plans orientés de manière décalée les uns par rapport aux autres dans le sens de la portance.

11. Multicoptère selon l'une des revendications précédentes,
**caractérisé en ce qu'**un segment (12) comporte au moins une cloison (17) et/ou une paroi latérale intérieure ou extérieure (13, 14) ajourée.

12. Multicoptère selon l'une des revendications précédentes,
**caractérisé en ce que** le corps de base (10) est réalisé en métal, en particulier en alliage léger.
